# EUROPEAN PATENT APPLICATION

(11) **EP 1 053 772 A2**
(43) Date of publication of application: **22.11.2000**
(21) Application number: 00303323.0
(22) Date of filing: 19.04.2000
(51) Int. Cl.: B01D 1/00

(54) **Random pack mass transfer media**

(30) Priority: 24.04.1999 GB 9909384
(71) Applicant: Johnson, Richard Victor, Stafford ST19 9JT (GB)
(72) Inventor: Johnson, Richard Victor, Stafford ST19 9JT (GB)

(57) **Abstract**

A random pack mass transfer media constructed from ten or more cylindrical sections, each of which is open at both ends and along one side, joined together as described to provide extra surface area within the media which is smooth and free from crevices, evenly spaced and easily contacted.

## Description

This invention relates to a new form of random pack mass transfer media.

Mass transfer media provide a means for contacting two substances (normally one liquid, one gaseous) so that a chemical or biological transfer can take place between them.

There are a number of such media currently available which are all designed to give a large, accessible surface which is easily contacted by the liquid (normally falling downwards) and the gas (passing upwards) - see figures One and Two.

Mass transfer media are manufactured from any material, which will allow the media to maintain its structure in its working environment. Plastic, metal and ceramic being some materials in current use.

An early example of random pack media is the Rashig ring. Here short lengths of pipe (length = diameter) are random dumped in large quantities into a vessel which allows the liquid and gas to pass in opposite directions.

From this initial concept a wide range of media have been developed to either:
a) improve throughput and give contact to the inside of the pipe, by cutting holes in the surface, and/or;
b) increasing the strength and surface area with internal and external ribs or by corrugating the surface.

Unfortunately most of these developments have had the disadvantage of making the media more prone to blockage, particularly at the point where internal ribs join together. Blockage problems have greater relevance in biological filters where sludge and dead or dying bacteria can build up to either block or greatly reduce the efficiency of the packed bed.

With the proposed invention the additional surface area and access to the centre of the media (for the two substances being contacted) is provided by joining together ten or more cylindrical sections, each of which is open at both ends and along one side. Half of the cylinders have the open side facing towards the centre of the media, the other half having the open side facing away from the centre. They are joined together on the tangent line of their openings in an arrangement which best maintains equal spaces between the surfaces of the media, to form an open, smooth shaped media with large, easily contacted surfaces which are free from crevices. An example of how this is achieved is shown in Figures Three, Four and Five.

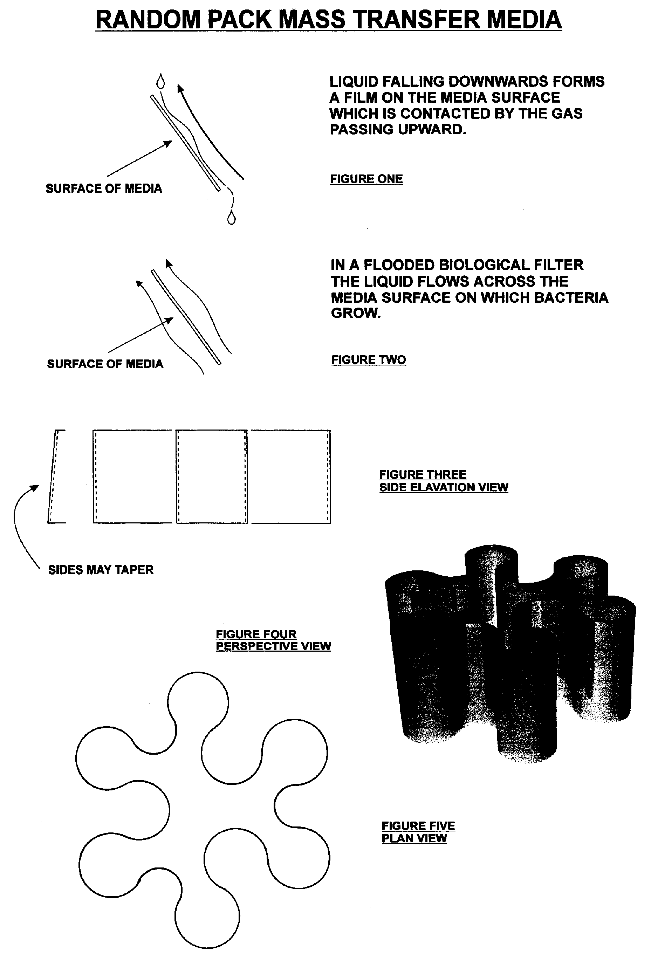

## Claims

1. A random pack mass transfer media constructed from ten or more cylindrical sections, each of which is open at both ends and along one side, joined together as described to provide extra surface area within the media which is smooth and free from crevices.

2. A random pack mass transfer media constructed from ten or more cylindrical sections, each of which is open at both ends and along one side, joined together as described to provide extra surface area within the media which is evenly spaced.

3. A random pack mass transfer media constructed from ten or more cylindrical sections, each of which is open at both ends and along one side, joined together as described to provide extra surface area within the media which is easily contacted.
